# EUROPEAN PATENT APPLICATION

(11) **EP 2 320 252 A1**
(43) Date of publication of application: **11.05.2011**
(21) Application number: 09174994.5
(22) Date of filing: 04.11.2009
(51) Int. Cl.: G01V 11/00

(54) **Method and apparatus for compensating borehole fluid effects in formation measurements**

(71) Applicant: Services Pétroliers Schlumberger, 75007 Paris (FR); Schlumberger Holdings Limited, Tortola (VG); Prad Research And Development Limited, Tortola (VG); Schlumberger Technology B.V., 2514 JG The Hague (NL)
(72) Inventor: Faivre, Olivier, 92142, Clamart (FR); Hizem, Medhi, 92142, Clamart (FR); Meignant, Didier, 92142, Clamart (FR); Hayman, Andrew, 92142, Clamart (FR); Bloemenkamp, Richard, 92142, Clamart (FR); Jacob, Gregoire, 92142, Clamart (FR)
(74) Representative: Hyden, Martin Douglas

(57) **Abstract**

A method of determining the properties of a formation surrounding a fluid-filled borehole comprises positioning a sensor in a first position in the borehole where it is primarily sensitive to the formation; making a first measurement with the sensor in the first position; positioning a sensor in a second position in the borehole where it is primarily sensitive to the borehole fluid; making a second measurement with the sensor in the second position; and using the first and second measurements to determine the formation property, wherein the sensor faces the borehole wall in both the first and second positions. Apparatus for measuring properties of a formation surrounding a fluid-filled borehole comprises a tool body carrying a sensor that can be positioned in a first position facing the borehole wall so as to make a first measurement that is primarily sensitive to the formation or in a second position facing the borehole wall so as to make a second measurement that is be primarily sensitive to the borehole fluid.

## Description

### Technical field

This invention relates to methods and apparatus for making formation measurements in fluid-filled boreholes. The invention finds particular application in the field of well logging in the oil and gas industry.

### Background art

It is well-known to measure formation properties in a shallow region adjacent to a borehole. They are measured and recorded as a function of depth using sensor(s) on pad(s) or skid(s) pressed against the borehole wall. One example of such measurements are micro-resistivity measurements such as are made by the FMI and OBMI tools of Schlumberger.

One particular problem encountered with such measurements is that the fluid in the borehole can have a significant effect on the measured property, either as a result of sensor standoff, or invasion. Because the properties of the borehole fluid vary as a function of depth in the borehole, it is not always possible to apply a single correction factor to the measurements.

The effect of borehole fluid is particularly significant in acoustic measurements, especially ultra-sonic reflection measurements of the type commonly used to inspect the condition of the borehole wall. One such tool is the UBI of Schlumberger. In this case, the acoustic sensor scans the surface of the borehole wall and measures reflections to determine the physical shape of the borehole. In order to do this, it is necessary to know the speed of propagation of the acoustic signal in the borehole fluid. This is done by rotating the sensor through 180 degrees to face a part of the tool a known distance from the source. Thus, the time of flight of the signal can be used to derive its speed in the borehole fluid.

This invention seeks to provide a method for make a formation measurement independent of borehole fluid properties

### Disclosure of the invention

A first aspect of the invention provides a method of determining the properties of a formation surrounding a fluid-filled borehole, comprising:
- positioning a sensor in a first position in the borehole where it is primarily sensitive to the formation;
- making a first measurement with the sensor in the first position;
- positioning a sensor in a second position in the borehole where it is primarily sensitive to the borehole fluid;
- making a second measurement with the sensor in the second position; and
- using the first and second measurements to determine the formation property, wherein the sensor faces the borehole wall in both the first and second positions.

Where the method comprises using a tool having a sensor mounted on a movable arm, the method can further comprise positioning the tool body in the borehole and moving the arm between extended and retracted positions to place the sensor in the first or second position. This can comprise moving the arm to the extended position when placing the sensor in the first position, and moving the arm to the retracted position when placing the sensor in the second position.

The tool can have multiple arms, each of which carries a sensor, in which case the method can further comprise moving all the arms into the first position or all the arms into the second position; or positioning the tool body such that at least one arm is extended and in the first position and at least one arm is retracted and in the second position.

One embodiment of the method comprises positioning the tool body to one side of the borehole when positioning the sensor in the first and/or second position. Another comprises centralising the tool body in the borehole when positioning the sensor in the first and/or second position.

The method can comprise making one measurement when running a measurement tool into the borehole, for example the second measurement, and making the other measurement when pulling the tool out of the borehole.

An embodiment of the method involved determining fluid properties as a function of depth in the borehole, including as a function of distance along the borehole, temperature in the borehole, and/or pressure in the borehole.

A second aspect of the invention provides apparatus for measuring properties of a formation surrounding a fluid-filled borehole, comprising a tool body carrying a sensor that can be positioned in a first position so as to make a first measurement that is primarily sensitive to the formation or in a second position so as to make a second measurement that is be primarily sensitive to the borehole fluid.

The tool body can further comprise a mechanism operable to centralise the tool body on the borehole when making the first and/or second measurement, or to displace the tool body to one side of the borehole when making the first and/or second measurement.

The tool body comprises moveable arms capable of extending from the tool body, with sensors optionally located on the arms.

The tool body can also comprise a weight positioned to the side of the tool body to orient the tool in the borehole under the effect of gravity, or another mechanical device known as a "tool turner".

Further aspects of the invention will be apparent from the following description.

### Brief description of the drawings

Embodiments of the present invention will now be described by way of an example with reference to the accompanying drawings, in which;
Figure 1 shows an embodiment of the invention with a multi-pad tool;
Figure 2 shows an embodiment of the invention with a multi-pad tool;
Figure 3 shows a side aspect of an embodiment of the invention with a multi-pad tool;
Figure 4 shows a side aspect of an embodiment of the invention with a multi-pad tool;
Figure 5 shows a tool configuration for another embodiment of the invention with a multi-pad tool; and
Figures 6 and 7 shows tool configurations for embodiments of the invention with a single pad (or multiple pad) tool.

### Mode(s) for carrying out the invention

This invention provides a method of making borehole formation measurements in which the effects of the borehole fluid on the formation measurement can be accommodated. In the examples below, the invention is described in relation to a tool comprising measurement sensors mounted on pads which are connected to a tool body by means of arms that can extended to place the pads in contact with the formation, or retracted around the tool body for running into the well. Examples of such tools are micro-resistivity imaging tools such as the FMI of Schlumberger. Others include high-frequency dielectric measurement tools and micro-resistivity imaging tools for boreholes filled with oil-based mud. The fluid properties in the borehole are measured and recorded continuously versus depth or at discrete depths using the same sensors retracted so that the measurement is essentially sensitive to the fluid. In the case the measurements are taken at discrete depths, the fluid properties versus depth can be obtained using interpolation. The fluid properties versus depth are used to correct the formation measurements at the corresponding depths for the influence of the fluid in the gap between the sensor(s) and the formation.

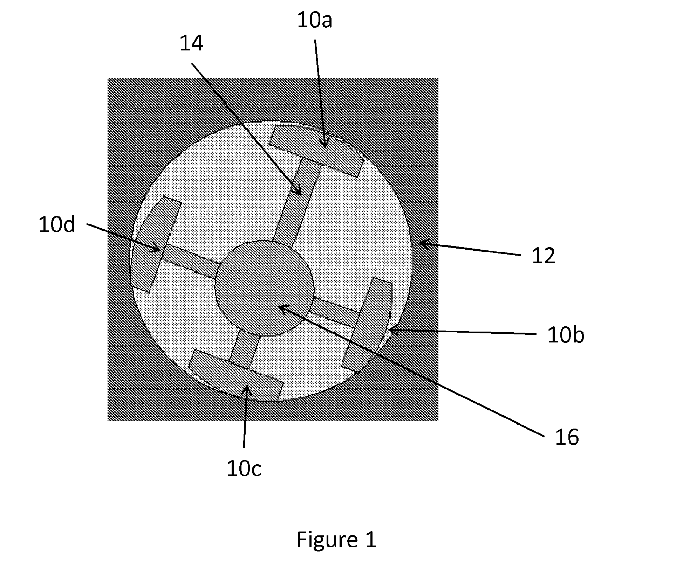

Figures 1 to 5 give some more specific examples of measuring the borehole fluid with retracted or partially retracted pads.

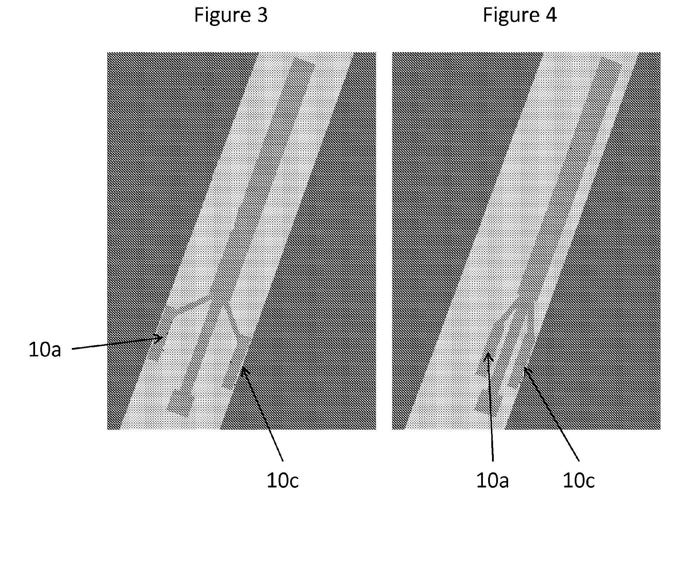

Figures 1 and 3 show the normal tool configuration in a measurement operation. All pads 10a-d are positioned against or close to the borehole wall 12 such that the sensors on the pad are primarily sensitive to the formation properties. The pads 10 are mounted on arms 14 that extend from a tool body 16. The tool body 16 is usually eccentered in the hole, most commonly due to the effect of gravity (even when the hole is nominally vertical). The arms 14 have been adjusted to ensure that all pads 10 remain in contact with the borehole wall 12.

Each pad 10 will undergo some effect due to the borehole fluid, either due to invasion of the formation wall, or due to standoff from the borehole wall.

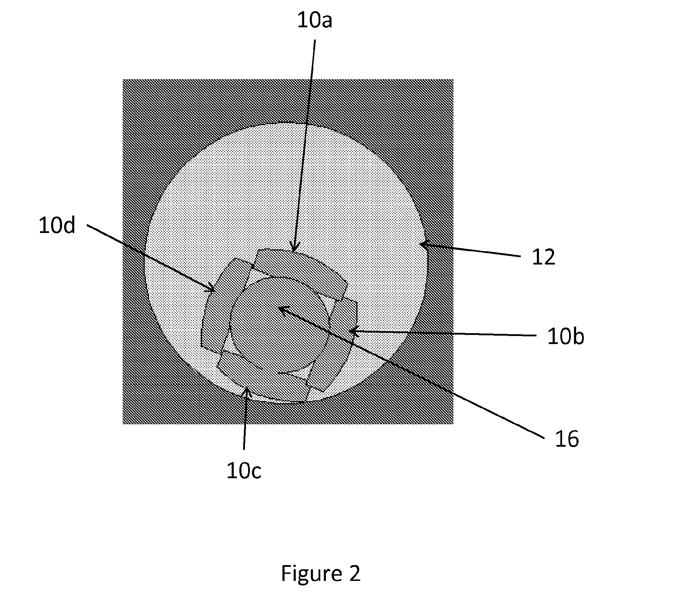

Figures 2 and 4 show the tool of Figure 1 with the pads 10 retracted against the tool body 16. Because of the eccentering of the tool, usually due to deviation of the borehole, at least one pad 10a will be a large distance away from the borehole wall 12 such that it will be primarily sensitive to the borehole fluid. Pads 10b and 10d are likewise separated from the borehole wall However, pad 10c is still adjacent the borehole wall. Therefore, making measurements with the tool in the retracted configuration will result in some pads giving measurements of the borehole fluid. Which pads are which can be identified by tool orientation measurements. The measurement of the borehole fluid properties can be used to analyze the formation measurements made with the arms in the extended position.

Usually the borehole is deviated from the vertical (if only slightly) and the pad on the low side is closest to the formation while the pad on the top side is furthest. The orientation of the tool with respect to gravity is measured using an inclinometer in the same tool or in the same tool string and the fluid properties are determined using the pad on the top side. Instead of an inclinometer, auxiliary measurements can be used such as mechanical (caliper) or acoustic measurements. Although the top pad is the preferable pad, any pad with a sufficiently large gap between sensor(s) and the formation can be used.

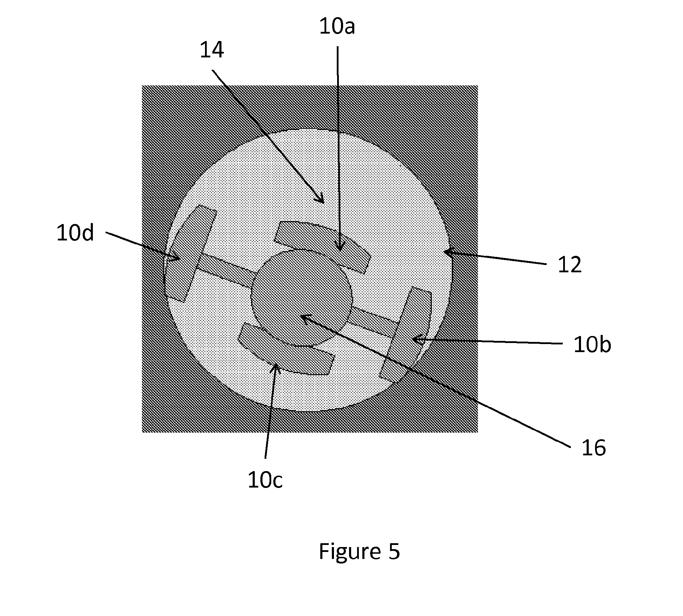

Figure 5 shows an example where some pads 10b, 10d are deliberately positioned close to the borehole wall 12 while others 10a, 10c are positioned far away from it by extending or retracting specific arms on the tool. This allows simultaneous measurement of the formation property (such as resistivity) and the fluid (mud) characteristics.

Certain types of tool include only one measurement pad or skid, or have the sensor in the tool body. In this case there are other options to implement the invention.

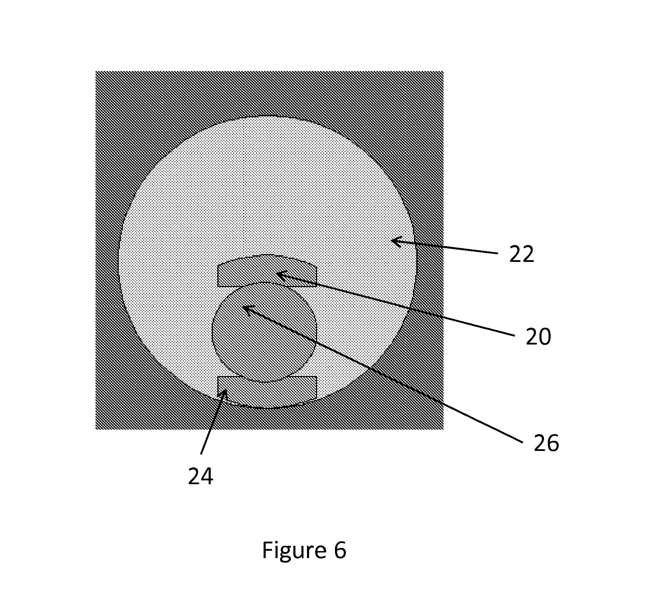

Figure 6 shows an embodiment in which the pad 20 is oriented mechanically towards the top side of the hole 22 using weights 24 on the one side of the tool body 26 or a mechanical method known as the "tool turner".

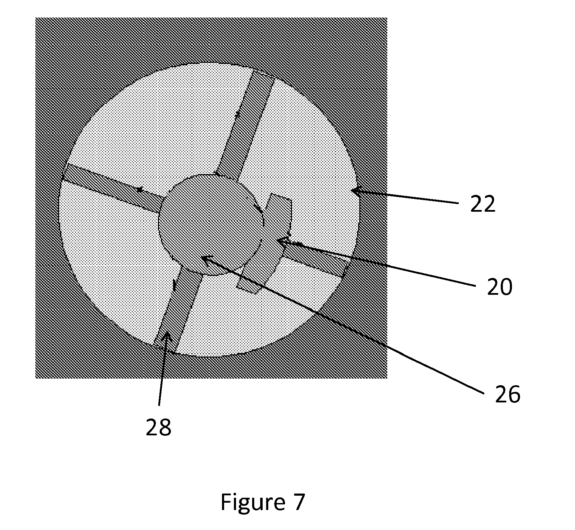

Figure 7 shows the use of separate centralizing arms or standoffs 28 which ensure the tool body 26 is approximately in the centre of the hole 22 at all times so that the pad 20 essentially measures the mud when retracted.

Most logging tools pass the same borehole depth at least twice:
once while the tool is running down hole, once while the tool is running up hole. For a single logging run, the pressure and
temperature vary in the borehole with depth between surface pressure and temperature and some down-hole pressure and
temperature. The borehole fluid characteristics vary mainly as a function of pressure and temperature. Therefore, the invention provides a way to perform at least one run where the sensors are positioned such that the borehole fluid influence is significant. This way we can obtain fluid characteristics as a function of geometric depth and/or temperature and/or pressure.
Since the tool normally makes two passes through the borehole (one down, one up) no extra time for the operation should be necessary.

The fluid measurements may be made as a series of discrete measurements rather than as a continuous log versus depth, depending on operational requirements. In this case, the discrete measurements are interpolated to provide a continuous estimate of fluid properties versus depth, pressure or temperature.

Many tools cannot be run into the well with the sensors positioned close to the formation for mechanical reasons. However, it may still be possible to make the measurement used for fluid characterization, with the tool arms retracted, for example.

A number of existing measurement techniques can adopt the method of the invention, including array dielectric logging measurements, microresistivity images in boreholes filled with oil-based mud, and shallow resistivity measurements in water-base mud. Other applications include nuclear and micro-sonic measurements.

Other changes can be made within the scope of the invention.

## Claims

1. A method of determining the properties of a formation surrounding a fluid-filled borehole, comprising:
- positioning a sensor in a first position in the borehole where it is primarily sensitive to the formation;
- making a first measurement with the sensor in the first position;
- positioning a sensor in a second position in the borehole where it is primarily sensitive to the borehole fluid;
- making a second measurement with the sensor in the second position; and
- using the first and second measurements to determine the formation property, wherein the sensor faces the borehole wall in both the first and second positions.

2. A method as claimed in claim 1, comprising using a tool having a sensor mounted on a movable arm, the method further comprising positioning the tool body in the borehole and moving the arm between extended and retracted positions to place the sensor in the first or second position.

3. A method as claimed in claim 2, comprising moving the arm to the extended position when placing the sensor in the first position.

4. A method as claimed in claim 2, comprising moving the arm to the retracted position when placing the sensor in the second position.

5. A method as claimed in claim 2, 3 or 4 wherein the tool has multiple arms, each of which carries a sensor, the method further comprising moving all the arms into the first position or all the arms into the second position.

6. A method as claimed in claim 2, 3 or 4, wherein the tool has multiple arms, each of which carries a sensor, the method further comprising positioning the tool body such that at least one arm is extended and in the first position and at least one arm is retracted and in the second position.

7. A method as claimed in any of claims 2-6, comprising positioning the tool body to one side of the borehole when positioning the sensor in the first and/or second position.

8. A method as claimed in any of claims 2-6, comprising centralising the tool body in the borehole when positioning the sensor in the first and/or second position.

9. A method as claimed in any preceding claim, comprising making one measurement when running a measurement tool into the borehole and making the other measurement when pulling the tool out of the borehole.

10. A method as claimed in claim 9, comprising making the second measurement when running into the borehole.

11. A method as claimed in any preceding claim, comprising determining fluid properties as a function of depth in the borehole.

12. A method as claimed in claim 11, comprising determining the fluid properties as a function of distance along the borehole, temperature in the borehole, and/or pressure in the borehole.

13. Apparatus for measuring properties of a formation surrounding a fluid-filled borehole, comprising a tool body carrying a sensor that can be positioned in a first position facing the borehole wall so as to make a first measurement that is primarily sensitive to the formation or in a second position facing the borehole wall so as to make a second measurement that is be primarily sensitive to the borehole fluid.

14. Apparatus as claimed in claim 13, wherein the tool body further comprises a mechanism operable to centralise the tool body on the borehole when making the first and/or second measurement.

15. Apparatus as claimed in claim 13, wherein the tool body further comprises a mechanism operable to displace the tool body to one side of the borehole when making the first and/or second measurement.

16. Apparatus as claimed in claim 14 or 15, wherein the tool body comprises moveable arms capable of extending from the tool body.

17. Apparatus as claimed in claim 16, comprising sensors located on the arms.

18. Apparatus as claimed in claim 17, wherein the tool body further comprises a weight positioned to the side of the tool body orient the tool in the borehole under the effect gravity.
